(19) Europäisches Patentamt
European Patent Office
Office européen des brevets

(11) **EP 2 876 485 A1**

(12) **EUROPEAN PATENT APPLICATION**

(43) Date of publication:
27.05.2015 Bulletin 2015/22

(51) Int Cl.:
*G02B 27/10* (2006.01)   *G02B 1/00* (2006.01)

(21) Application number: **14192975.2**

(22) Date of filing: **13.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.11.2013 JP 2013239505
25.06.2014 JP 2014130155**

(71) Applicant: **NGK Insulators, Ltd.
Nagoya-shi, Aichi 467-8530 (JP)**

(72) Inventors:
• **Nomura, Masaru**
**Nagoya-shi, Aichi 467-8530 (JP)**
• **Ohashi, Tsuneaki**
**Nagoya-shi, Aichi 467-8530 (JP)**
• **Shibata, Kazuyoshi**
**Nagoya-shi, Aichi 467-8530 (JP)**
• **Yamaguchi, Shoichiro**
**Nagoya-shi, Aichi 467-8530 (JP)**

(74) Representative: **TBK
Bavariaring 4-6
80336 München (DE)**

(54) **Dichroic film on a ceramic substrate**

(57) Optical component (701) comprising a dichroic film (71) coated on a ceramic substrate (70) having translucency and a plurality of crystal grains that are mutually bonded to one another through grain-boundary portions (RB).

FIG. 2

**Description**

BACKGROUND OF THE INVENTION

Field of the Invention

The present invention relates to an optical component and in particular to an optical component having a dichroic film.

Description of the Background Art

A dichroic film is a film having a function for reflecting light having a specific wavelength with light having the other wavelengths transmitting therethrough, that is, a function of a dichroic mirror. Since this function is often required for an optical system, an optical component including the dichroic film has been widely used.

For example, Japanese Patent Application Laid-Open No. 2011-197212 has disclosed a transmission type rotation fluorescent panel (color wheel) which an illumination device for projector has, as the above-mentioned optical component. This rotation fluorescent panel has a circular plate, a dichroic film formed on the circular plate and a fluorescent layer formed on the dichroic film. The dichroic film is, for example, a dielectric multilayer film. As a material for the circular plate, quartz glass, rock crystal, sapphire, optical glass and transparent resin are exemplified.

In the conventional technique, the dichroic film tends to be often peeled off from the circular plate (more generally, from a translucent member). In particular, in the case where a great temperature change occurs during the use of an optical component, this peeling tends to occur due to thermal expansion and contraction.

In general, in order to prevent the peeling, a roughening process (surface roughening) of a surface on which the film is formed is carried out in some cases. However, when the surface on which the dichroic film is formed is simply roughened, the structure of the dichroic film to be formed thereon is disturbed, with the result that a desired optical precision cannot be obtained in some cases.

SUMMARY OF THE INVENTION

The present invention has been devised to solve the above-mentioned problems, and its object is to provide an optical component that has high optical precision and also has a dichroic film that is hardly peeled off.

An optical component in accordance with one aspect of the present invention is provided with a ceramic member and a dichroic film. The ceramic member has a first main surface and a second main surface that is opposed to the first main surface. The ceramic member has translucency. The ceramic member has a plurality of crystal grains that are mutually bonded to one another through grain boundary portions. The dichroic film is formed on the first main surface of the ceramic member.

An optical component in accordance with another aspect of the present invention is provided with a ceramic member, a dichroic film, a fluorescent layer and an antireflective film. The ceramic member is provided with a first main surface that serves as an as-fired surface, and a second main surface that is opposed to the first main surface and serves as a polished surface. The ceramic member has translucency. The dichroic film is formed on the first main surface of the ceramic member. The fluorescent layer is formed on the dichroic film. The antireflective film is formed on the second main surface of the ceramic member.

An optical component in accordance with still another aspect of the present invention is provided with a ceramic member, a dichroic film, a fluorescent layer and an antireflective film. The ceramic member is provided with a first main surface that serves as an as-fired surface, and a second main surface that is opposed to the first main surface and serves as an as-fired surface. The ceramic member has translucency. The dichroic film is formed on the first main surface of the ceramic member. The fluorescent layer is formed on the dichroic film. The antireflective film is formed on the second main surface of the ceramic member.

In accordance with the optical component of the present invention, the dichroic film is formed on the ceramic member having a plurality of crystal grains that are mutually bonded to one another through grain boundary portions. The surface of each crystal grain is comparatively flat even if it is an as-fired surface, and is further flattened easily by being polished, if necessary. Therefore, it is possible to suppress disturbance of the configuration of the dichroic film to be formed on the ceramic member. Thus, the dichroic film is allowed to have high optical precision. On the other hand, comparatively large irregularities are naturally caused on the surface of each boundary portion of the as-fired surface, and even after the polishing process, the irregularities are easily caused on the surface of each boundary portion. By an anchoring effect caused by these irregularities, the peeling off of the dichroic film can be suppressed. As described above, while maintaining the optical precision of the dichroic film, the peeling off of the dichroic film can be suppressed.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a cross-sectional view that schematically shows a configuration of an optical component in accordance with first preferred embodiment of the present invention;
FIG. 2 is a partial plan view showing an example of a configuration of a first main surface of a ceramic member of FIG. 1;
FIG. 3A is a schematic partial cross-sectional view taken along line IIIA-IIIA of FIG. 2;
FIG. 3B is a schematic partial cross-sectional view taken along line IIIB-IIIB of FIG. 2;
FIG. 3C is a schematic partial cross-sectional view taken along line IIIC-IIIC of FIG. 2;
FIG. 4 is a cross-sectional view showing a modified example of FIG. 1;
FIG. 5 is a cross-sectional view that schematically shows a configuration of an optical component in accordance with second preferred embodiment of the present invention;
FIG. 6 is a flow chart that schematically shows a method for manufacturing the optical component of FIG. 5;
FIG. 7 is a cross-sectional view that schematically shows a configuration of an optical component in accordance with third preferred embodiment of the present invention;
FIG. 8 is a flow chart that schematically shows a method for manufacturing the optical component of FIG. 7;
FIG. 9A is a plan view that schematically shows a configuration of an optical component used for a light emitting device in accordance with fourth preferred embodiment of the present invention;
FIG. 9B is a cross-sectional view that schematically shows a configuration of the light emitting device in a view taken along line IXB-IXB of FIG. 9A;
FIG. 10 is a cross-sectional view that schematically shows a configuration of a light emitting device in accordance with fifth preferred embodiment of the present invention;
FIG. 11 is a cross-sectional view that schematically shows a configuration of a light emitting device in accordance with sixth preferred embodiment of the present invention;
FIG. 12 is a cross-sectional view that shows a modified example of FIG. 11; and
FIG. 13 is a schematic view showing an example of a measuring method for front transmittance.

DESCRIPTION OF THE PREFERRED EMBODIMENTS

Referring to FIGS., the following description will discuss preferred embodiments of the present invention. Additionally, in the following drawings, those portions that are the same or corresponding portions are indicated by the same reference numerals, and the description thereof will not be repeated.

(First preferred embodiment)

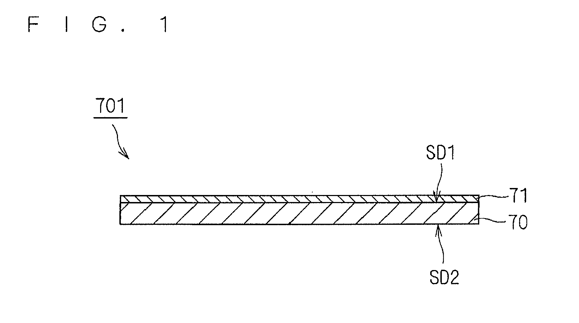

As shown in FIG. 1, an optical component 701 is applied to an optical system that deals with light from a light source, such as a light emitting diode (LED), a laser, a lamp, or the like. This is provided with a ceramic plate 70 (ceramic member) and a dichroic film 71.
The ceramic plate 70 is provided with a main surface SD1 (first main surface) and a main surface SD2 (second main surface that is opposed to the first main surface). As shown in the drawing, the ceramic plate 70 preferably has a flat plate shape. The thickness of the ceramic plate 70 (dimension in the longitudinal direction of the drawing) is set to, for example, 0.01 mm or more to 5 mm or less, and the area is set to about 0.1 mm × 0.1 mm or more when the shape corresponds to a square shape, and as the area becomes larger, the thickness is preferably made larger so as to ensure strength.
Additionally, FIG. 1 shows the ceramic plate 70 having a flat plate shape as the ceramic member; however, the ceramic member is not particularly limited to the member having the flat plate shape. The ceramic member may have, for example, a three-dimensional shape on each of the two main surfaces or one of the main surfaces. As such a shape, for example, a curved surface shape (concavo-convex lens shape) or an aggregate thereof may be used. For the purpose of heat radiation, on the ceramic member, a shape of cooling fins may be formed, or hole portions or protruding portions may be formed.
The ceramic plate 70 has translucency. For example, in the case of putting an emphasis on translucency, the front transmittance is preferably set to about 30% or more, and more preferably, to about 70% or more. In the case of putting an emphasis on diffusing property of light in the ceramic plate 70 rather than on translucency, the front transmittance is preferably set to about 50% or more. In this case, the diffusing property is defined as follows.

Diffusing property = 1 - Linear transmittance/Front transmittance

As a material for the ceramic plate 70, materials, such as aluminum oxide, spinel, PLZT (lanthanum lead titanate zirconate), YAG (yttrium-aluminum- garnet) or the like, may be utilized. Among these, those materials containing aluminum oxide as a main component are preferably used. More specifically, those containing aluminum oxide of 90% or more are preferably used, and those containing 99% or more are more preferably used. In this case, the refractive index of the ceramic plate 70 is, for example, set to 1.73 or more to 1.77 or less, and the thermal expansion coefficient thereof is, for example, about $6 \times 10^{-6}$/K.

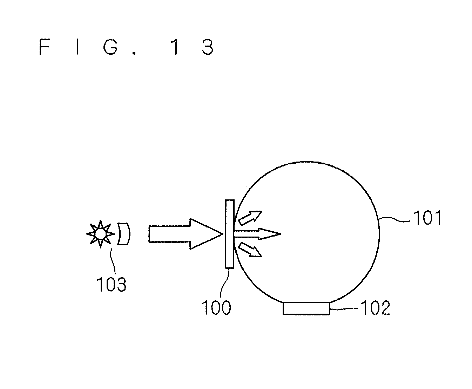

Additionally, with respect to the measuring method for the above-mentioned "front transmittance", as shown in FIG. 13, a spectrophotometer (U-4100, made by Hitachi High-Technologies Corporation) having an integrating sphere 101 with an incident inlet and a detector 102 was used for the measurement. Monochromatic light having a specific wavelength, for example, a wavelength of 555 nm, emitted from the light source 103, is made incident on the surface of a translucent substrate 100 (measuring sample) secured onto the incident inlet of the integrating sphere, and radiation light that is radiated from the rear surface side toward the integrating sphere by passing through the measuring sample is detected by a detector. The front transmittance is calculated by a ratio (=I/I0) between light intensity (I) at the time of collecting visible light passing through the measuring sample by the integrating sphere and light intensity (10) at the time of measuring without securing the measuring sample onto the integrating sphere

The dichroic film 71 is formed on the main surface SD1 of the ceramic plate 70. More specifically, the dichroic film 71 is a laminate formed by stacking a film having a comparatively high refractive index (high refractive index film) and a film having a comparatively low refractive index (low refractive index film) in the thickness direction. The laminate is made of inorganic materials. The laminate is preferably prepared as a multilayer film of dielectric materials. For example, as the high refractive index film, a $TiO_2$ film (having a refractive index of about 2.2 to 2.5) or a $Ta_2O_3$ film (having a refractive index of about 2 to 2.3) is used, and as the low refractive index film, an $SiO_2$ film (having a refractive index of about 1.45 to 1.47) or an $MgF_2$ film (having a refractive index of about 1.38) is used. The thickness of each film is, for example, 50 nm or more to 500 nm or less. The laminate includes high refractive index films and low refractive index films respectively, for example, in a range of about 5 layers or more to 100 layers or less. In this manner, the dichroic film 71 is normally provided with a number of films having thicknesses in a nano-meter order so as to obtain desired optical characteristics. For this reason, the main surface SD1 on which the dichroic film 71 is formed is preferably designed so as not to excessively disturb the structure of the dichroic film 71. Additionally, a material for the outermost layer of the dichroic film having a multilayer structure may have hardness higher than that of the other layers. Thus, it is possible to increase a mechanical strength such as abrasion resistance. As the hard material, $SiO_2$ is, in particular, desirable.

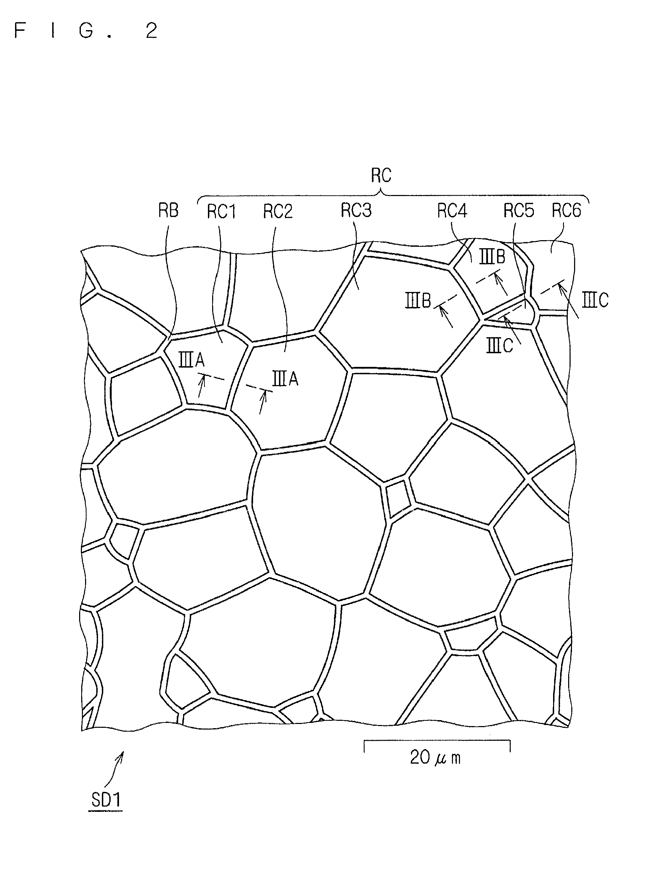

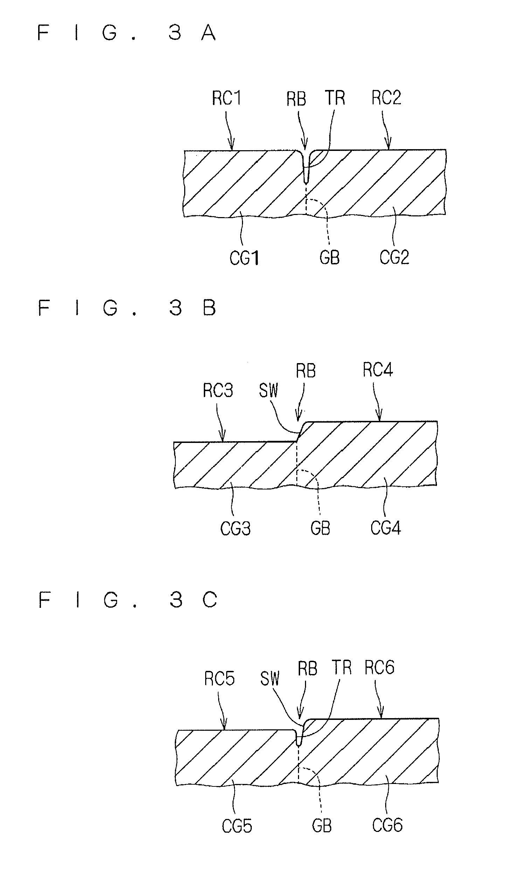

As shown in FIG. 2 and FIG. 3, the ceramic plate 70 has a polycrystal structure. That is, as shown in FIG. 3, the ceramic plate 70 has crystal grains (generally referred to as crystal grains CG) including crystal grains CG1 to CG6 that are combined with one another with grain boundary portions GB interposed therebetween.

The average grain size of the crystal grains is preferably set to 0.5 to 50μm. The measurements of the average grain size are carried out, for example, in the following manner. An arbitrary portion of a sample is observed by an optical microscope in a magnification of 200 times. On the observed image, the number N of crystals located on a line segment of 0.7 mm is counted. In this case, the average grain size can be calculated by the following expression: $0.7 \times (4/\pi)$/N

Next, the following description will discuss, in particular, a preferable configuration of the main surface SD1. However, the configuration of the main surface SD1 is not necessarily limited to this.

The main surface SD1 has grain boundary regions RB each extending along the grain boundary portions GB, and crystal regions RC that are located on respective crystal grains CG each surrounded by the grain boundary regions RB. For example, on the respective crystal grains CG1 to CG6, the crystal regions RC1 to RC6, each surrounded by the grain boundary regions RB, are located.

The width of each of the grain boundary regions RB is larger than the width of each of the grain boundary portions GB. The grain boundary region RB has an area smaller than the area of the crystal region RC. On the main surface SD1, the area of the crystal regions RC occupies 90% or more and the area of the grain boundary regions RB occupies 10% or less. The grain boundary regions RB are composed of an amorphous phase containing constituent components of crystal grains or spaces (pores). The surface roughness can be defined by Ra. The crystal region RC preferably has a surface roughness of Ra 2000 nm or less, more preferably, a surface roughness of Ra 500 nm or less. The grain boundary regions RB can be classified into three kinds of structures, for example, as shown in FIGS. 3A to 3C. However, the main surface SD1 is not necessarily required to include all the three kinds of structures. Moreover, different phase portions, such as grainless portions and fine cracks, that occur peculiarly may exist as long as they are limited to a range not giving adverse effects to functions as an optical component.

In the structure of FIG. 3A, the surface heights of adjacent crystal regions RC1 and RC2 are virtually the same, and between these, the grain boundary region RB has a groove portion TR. In other words, the main surface SD1 has the groove portion TR between the crystal grains CG1 and CG2 that are mutually adjacent to each other. The groove portion preferably has a depth of 10 nm to 2000 nm.

In the structure of FIG. 3B, the surface heights of the adjacent crystal regions RC3 and RC4 are offset from each other, and between these, the grain boundary region RB has a side wall SW. In other words, the main surface SD1 has the side wall SW between the mutually adjacent crystal grains CG3 and CG4. The side wall preferably has a height from 10 nm to 2000 nm.

In the structure of FIG. 3C, the above-mentioned two structures are compounded. That is, of the mutually adjacent crystal grains CG5 and CG6, the side wall SW protruding from the groove portion TR is formed on the crystal grain CG6.

The following description will discuss a method for manufacturing the ceramic plate 70. First, powder of $Al_2O_3$ is prepared. To this powder, a trace amount of a sintering aid may be added. Next, this powder is formed into a molded product. As the molding method, for example, molding methods, such as a tape molding method, a powder pressing method, a gel cast method, an in-print method or an extrusion method, may be used. The shape of the molded product is, for example, a plate shape. Alternatively, the shape of the molded product may be a three-dimensional structure, such as a lens shape. In particular, in the case of the plate shape, the tape molding method is preferably used, in the case of a simple three-dimensional structure, the powder pressing method is preferably used, and in the case of a complex or a thick structure, the gel cast method or the in-print method are preferably used. Next, this molded product is fired. The firing process can be carried out in the air; however, in the case of putting an emphasis on translucency, preferably, after calcination in the air up to a density of about 70%, the firing process is carried out preferably in a hydrogen atmosphere. Preferably, during the firing process, the dew point is controlled for the purpose of at least either adjusting the crystal grain size or controlling the sintering property, and more preferably, it is controlled to -30°C to +40°C. In particular, in the firing process in the hydrogen atmosphere, the dew point control is preferable. Next, by polishing the surface of the molded product thus fired, if necessary, the main surface SD1 is formed. Furthermore, by carrying out the similar polishing process, if necessary, the main surface SD2 is formed. Thus, the ceramic plate 70 is obtained. In the case of putting an emphasis on diffusing property, the ceramic plate 70 is preferably designed to contain a very small amount of pores, for example, in a volume of 1 ppm to 1000 ppm.

As the polishing method, after obtaining a flat plane by carrying out a mechanical polishing process, a CMP (Chemical Mechanical Polishing) process is preferably carried out so as to have a predetermined surface roughness. By using conditions capable of easily grinding the grain boundary portions GB as the CMP conditions, it becomes possible to easily form sufficiently large irregularities on the grain boundary regions RB, while improving the flatness of the respective crystal regions RC. From the viewpoint of easily carrying out these polishing processes, the ceramic plate 70 is preferably formed into a flat plate shape.

Additionally, the above-mentioned polishing processes are not necessarily required, and in particular, in the case of putting an emphasis on the diffusing property of light of the translucent member, the as-fired surface is desirably applied. Moreover, the surface roughness of the as-fired surface can be controlled by a ceramic composition, a sintering aid, firing conditions, or the like, and the surface roughness Ra is preferably set to 0.01 to 10 $\mu$m.

In accordance with the present embodiment, the dichroic film 71 is formed on the ceramic plate 70 having crystal grains CG that are mutually combined with one another through the grain boundary portions GB. Since the surfaces (grain boundary region RB) of the grain boundary portions GB easily have irregularities, the peeling off of the dichroic film 71 is suppressed by a so-called anchoring effect. In particular, in the case where the main surface SD1 of the ceramic plate 70 on which the dichroic film 71 is an as-fired surface, since the anchoring effect is more effectively exerted, the peeling off of the dichroic film 71 is further suppressed. On the other hand, the surface (crystal region RC) of each of crystal grains CG is comparatively flat even when it is an as-fired surface, and, if necessary, by being polished, this can be further flattened easily, and the surfaces thereof occupy a great ratio of the main surface SD1. Therefore, the disturbance of the structure of the dichroic film 71 to be formed thereon becomes small. Consequently, the dichroic film 71 is allowed to have high optical precision. As described above, the peeling off of the dichroic film 71 can be suppressed without impairing the optical precision of the dichroic film 71 so much.

The above-mentioned suppressing function of peeling off is, in particular, enhanced by forming the groove portion TR as shown in FIG. 3A or 3C. In particular, in the case of the latter, since the side wall SW is further added to the groove portion TR, the effect is further improved. The surface having this structure can be obtained adequately, by forming a CMP surface, a mechanically polished surface, a fired surface or a composite surface thereof.

Moreover, in accordance with the present embodiment, even when most of the main surface SD1 is occupied by crystal regions RC having high flatness, light to be transmitted through the ceramic plate 70 can be appropriately diffused by scattering caused by the grain boundary portions GB inside the ceramic plate 70. In particular, in the case where a laser is used as the light source, speckle noise can be reduced by this diffusion. In particular, in the case of putting an emphasis on the diffusing property, the average crystal grain size is preferably set to 0.5 to 10 $\mu$m. Moreover, in the case where an emphasis is further put on the diffusing property, the surface roughness Ra of one of the main surfaces SD1 and SD2 is desirably made greater than the surface roughness of the other within the range of 0.001 to 20 $\mu$m. In particular, if the surface roughness of one of the main surfaces on which a film such as the dichroic film 71 is not formed is made higher, this structure suppresses the degradation of the film performance, which is preferable.

(Modified Example)

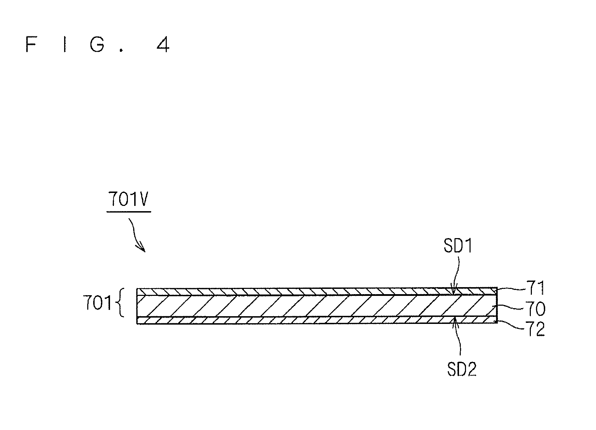

As shown in FIG. 4, an optical component 701V is provided with an antireflective film 72 formed on the main surface SD2 of the ceramic plate 70. The main surface SD2 has the same configuration as that of the main surface SD1 as described above in detail. The antireflective film 72 includes, for example, an $MgF_2$ film.

In accordance with the present modified example, not only the dichroic film 71 that is hardly peeled off, but also the antireflective film 72 that is hardly peeled off can be formed. Here, the antireflective film 72 refers to a film that is designed so as to have low reflection relative to the output wavelength of a light source such as an LED or an LD (laser diode).

(Second preferred embodiment)

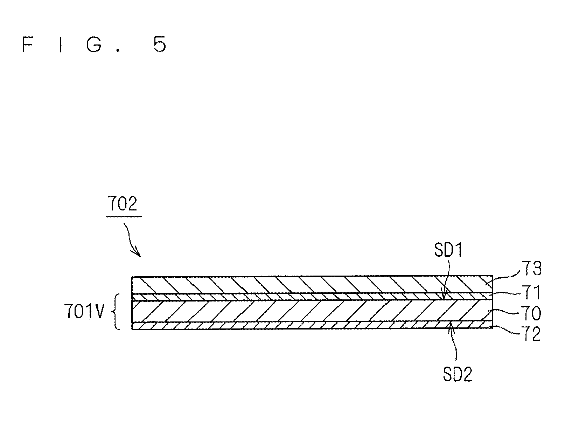

As shown in FIG. 5, an optical component 702 has a fluorescent layer 73 disposed on a dichroic film 71. The fluorescent layer 73 preferably contains fluorescent material particles. The thickness of the fluorescent layer 73 is preferably set to 5 to 500 $\mu$m. The average particle diameter of the fluorescent material particles is preferably set to 50 $\mu$m or less, more preferably, to 2 to 30 $\mu$m, most preferably, to 5 to 30 $\mu$m. In the case where the average particle diameter is excessively small (for example, less than 2 $\mu$m), it becomes difficult to deal with the powder, and in the case where the average particle diameter is excessively large (for example, 30 $\mu$m or higher), the uniformity of the fluorescent layer 73 deteriorates to cause a poor light emission luminance distribution.

A fluorescent material to be used for the fluorescent layer 73 is preferably prepared as an inorganic fluorescent material. For example, an oxide fluorescent material such as YAG, or a nitride or sulfide fluorescent material may be used. The fluorescent material to be used is not necessarily limited to one kind, and in order to obtain a target luminescent color, fluorescent materials composed of a plurality of colors may be mixed and utilized. Moreover, the ratios of the mixture may be adjusted on demand depending on a luminescent color to be designed.

The fluorescent layer 73 preferably contains glass or resin as a binder for binding the fluorescent material particles, and from the viewpoints of endurance reliability, heat resistance, light resistance or high heat radiating property, it more preferably contains inorganic glass. For a firing process at a low temperature, a PbO-based inorganic glass is preferably used. As a non-PbO-based inorganic glass, for example, $Bi_2O_3$ may be used. Moreover, from the viewpoint of moisture resistance, glass without containing an alkali metal oxide, $Bi_2O_3$ or the like is preferably used. With respect to the ratio between the fluorescent material particles and the binder, its volume ratio is preferably set from 95:5 to 10:90, and more preferably, from 90:10 to 30:70. In the case where the ratio of the binder is excessively small, the bonding strength between fluorescent material particles might become insufficient. In the case where the ratio of the fluorescent material particles is excessively small, the thickness of the fluorescent layer for obtaining a predetermined chromaticity becomes excessively large. Therefore, by taking these factors into consideration, a predetermined volume ratio is desirably determined. From the viewpoint of causing appropriate light scattering in the fluorescent layer, the fluorescent layer 73 is preferably provided with pores having 5 to 40 volume% relative to the entire volume of the fluorescent layer 73. These pores exert an effect for reducing (in other words, absorbing) the size of a stress caused by heat strain generated between the fluorescent layer 73 and the ceramic plate 70 due to a thermal change during the heating treatment in the manufacturing process and the use of the optical component 702. Moreover, the inorganic glass effectively exerts a function to light scattering of the fluorescent layer.

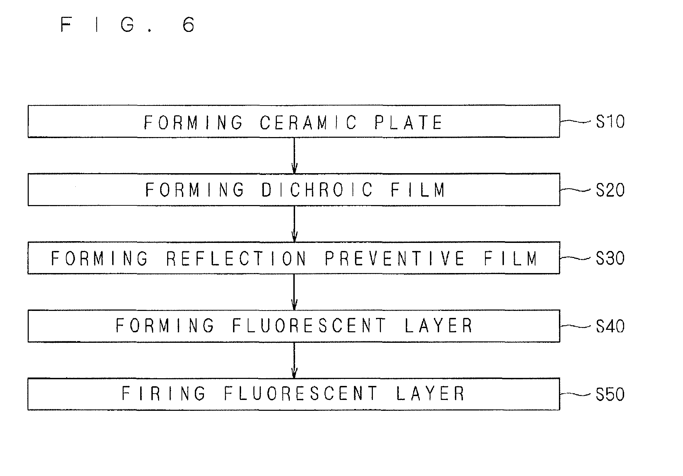

Referring to FIG. 6, the following description will discuss a method for manufacturing the optical component 702.

In step S10, in the same manner as in the method explained in first preferred embodiment, by molding ceramic powder into a plate shape and then carrying out a firing process thereon, a ceramic plate 70 is formed.

In step S20, a dichroic film 71 is formed on the main surface SD1 of the ceramic plate 70. For example, a vapor deposition of $SiO_2$ and a vapor deposition of $TiO_2$ are alternatively repeated. In step 30, for example, in the same method as in the formation of the dichroic film 71, an antireflective film 72 is formed on the main surface SD2 of the ceramic plate 70. Additionally, the order of steps S20 and S30 may be reversed.

In step S40, a fluorescent layer 73 is formed on the dichroic film 71. For example, a layer of a fluorescent material paste as a material for the fluorescent layer 73 is formed on the dichroic film 71 by using a screen printing method or a spin coating method. The fluorescent material paste may be prepared by diffusing fluorescent material powder and glass powder in an organic vehicle formed by dissolving an organic resin by an organic solvent.

In step S50, this fluorescent material paste is fired. The firing temperature is desirably set at a temperature that is a softening point of glass to be used or more and causes a glass melting state in which the fluorescent material particles are mutually combined. Moreover, the temperature is preferably set to 300°C or more to 900°C or less so as not to apply an excessive thermal damage to the dichroic film 71. The temperature raising and lowering rates in the firing process are preferably set so as not to become excessively high rates so that a high thermal stress is not applied between mutual constituent film components. Adequately, the temperature raising and lowering rates that can alleviate the stress applied to glass are selected.

By using the above-mentioned processes, the optical component 702 can be obtained.

Additionally, configurations other than those described above are virtually the same as those of the aforementioned first preferred embodiment; therefore, the same or corresponding elements are indicated by the same reference numerals, and the description thereof will not be repeated.

In accordance with the present embodiment, the dichroic film 71 and the fluorescent layer 73 are disposed on the main surface SD1 of the ceramic plate 70. Thus, fluorescent light emitted from the fluorescent layer 73 toward the dichroic film 71 is returned onto the fluorescent layer 73 by the dichroic film 71 without transmitting through the ceramic plate 70. Therefore, the above-mentioned fluorescent light can be returned to the fluorescent layer 73 without causing attenuation due to the transmission through the ceramic plate 70.

For example, on the assumption of using an LED for extracting white color by allowing a fluorescent material to emit yellow color by utilizing incident light of blue color, explanations will be given below in detail.

The dichroic film 71 is designed so as to reflect colors other than blue color at high rate. Incident light with blue color directed from the main surface SD2 is allowed to transmit the dichroic film 71 to reach the fluorescent material particles in the fluorescent layer 73 while the incident light is being diffused and scattered to expand by the ceramic plate 70. By being excited by the blue color light that has reached the fluorescent material particles, the fluorescent material particles emit yellow color light. If no dichroic film 71 was provided, a portion of the light emission from the fluorescent material would pass through the ceramic plate 70 to be wasted. In contrast, in the case where the dichroic film 71 is installed as in the case of the present embodiment, light is again returned onto the fluorescent layer 73 side by the film. The yellow color light thus returned is mixed with the blue color incident light to form white color light, and released onto the side opposite to the dichroic film 71 of the fluorescent layer 73. Thus, the total amount of light emission to form white color is greatly improved.

Moreover, in the case where the main surface SD1 of the ceramic plate 70 on which the dichroic film 71 is an as-fired surface, since light emitted by the fluorescent layer 73 is directed in all directions, the dichroic film 71 formed on the as-fired surface is capable of exerting virtually the same degree of functions as those of the dichroic film 71 formed on a polished surface, although there is disturbance of the structure of the dichroic film 71 caused by the fact that it is formed not on the polished surface, but on the fired surface. It is considered that the reason for this is because influences caused by the disturbance of the structure of the dichroic film 71 are different between that related to the reflection of light and that related to the transmission of light, and because the influence related to the reflection is smaller than that related to the transmission.

On the other hand, the main surface SD2 on which the antireflective film 72 is formed is preferably prepared as a polished surface so as to allow the antireflective film 72 to sufficiently exert the original functions of the antireflective film 72. This is because the direction of incident light onto the main surface SD2 forming the surface through which light is transmitted is made constant in most cases so that the main surface SD2 is substantially a mirror surface having a predetermined angle (for example, 90°) relative to this constant direction.

As described above, the combination of the main surface SD1 prepared as an as-fired surface and the main surface SD2 prepared as a polished surface is a desired combination in many cases. Thus, it becomes possible to ensure adhesion strength that is higher than that of the conventional product, while sufficiently maintaining respective actual optical performances of the dichroic film 71, the antireflective film 72 and the fluorescent layer 73.

Of course, the main surface SD2 is not necessarily limited to the polished surface, and may be formed as an as-fired surface. In this case, the adhesion strength of the antireflective film 72 is further improved. Additionally, although the antireflective film 72 formed on the as-fired surface might be slightly inferior to that formed on a polished surface in performances, it can exert an antireflective effect. In particular, in the case where the angle of light to be made incident on or released from the two main surfaces of the ceramic plate 70 is not constant, but at random, the difference in performances between the film on the as-fired surface and the film on the polished surface becomes smaller.

(Third preferred embodiment)

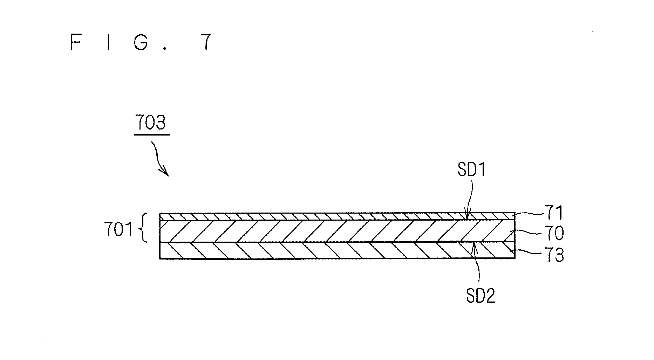

As shown in FIG. 7, an optical component 703 has a fluorescent layer 73 disposed on the main surface SD2 of the ceramic plate 70.

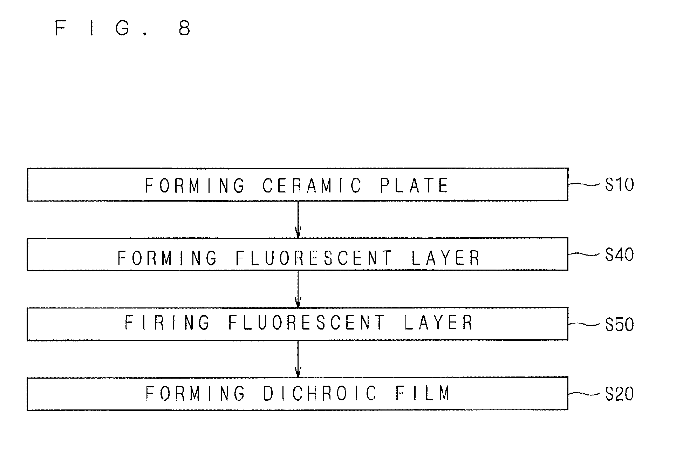

Referring to FIG. 8, the following description will discuss a method for manufacturing the optical component 703.

In step S10, in the same manner as in the method explained in first preferred embodiment, by molding ceramic powder into a plate shape and then carrying out a firing process thereon, a ceramic plate 70 is formed.

In step S40, a fluorescent layer 73 is formed on the main surface SD2 of the ceramic plate 70. More specifically, a fluorescent material paste as a material for the fluorescent layer 73 is screen-printed on the main surface SD2. In step S50, this glass paste is fired.

In step S20, a dichroic film 71 is formed on the main surface SD1 of the ceramic plate 70. For example, a vapor deposition of $SiO_2$ and a vapor deposition of $TiO_2$ are alternatively repeated. Thus, an optical component 703 is obtained.

Configurations other than those described above are virtually the same as those of the aforementioned first preferred embodiment; therefore, the same or corresponding elements are indicated by the same reference numerals, and the description thereof will not be repeated.

In accordance with the present embodiment, the formation of the dichroic film 71 is carried out after the firing process of the fluorescent layer 73. Thus, it is possible to avoid the firing process of the fluorescent layer 73 from directly giving effects to the dichroic layer 71. Therefore, it is possible to suppress deviations in optical characteristics of the dichroic film 71. Moreover, it becomes possible to avoid peeling off of the dichroic film 71 caused by the firing process.

As described above, in the present embodiment, it is possible to select the firing temperature of the fluorescent layer 73 without the necessity of taking into consideration thermal damage to the dichroic film 71.

(Fourth preferred embodiment)

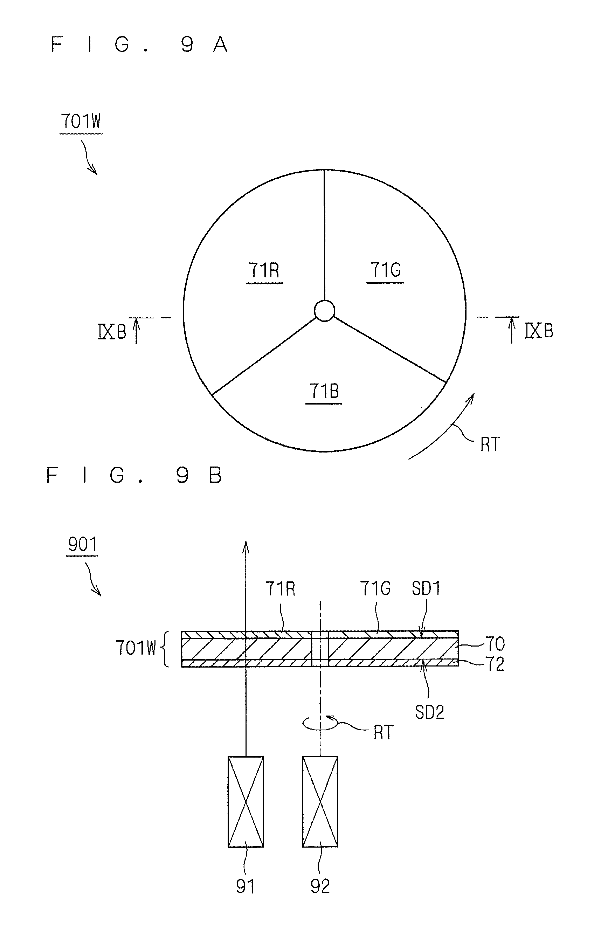

As shown in FIG. 9A and FIG. 9B, a light emitting device 901, which is built into a projector (not shown), is provided with a color wheel 701W (optical component). The color wheel 701W is provided with a ceramic plate 70, dichroic films 71R, 71G and 71B, and an antireflective film 72. In the present embodiment, the ceramic plate 70 has a disc shape. The dichroic films 71R, 71G and 71B are respectively disposed on the ceramic plate 70, and have virtually the same configuration as that of the dichroic film 71 (first preferred embodiment). Moreover, each of the dichroic films 71R, 71G and 71B has a fan shape partially forming this disc shape.

In addition to the above-mentioned color wheel 701W, the light emitting device 901 is also provided with a light source 91 and a rotation driving unit 92. The rotation driving unit 92, which drives to rotate the color wheel 701W around the center of the disc shape, is prepared as, for example, an electric motor. The light source 91, which allows light to be made incident on a position deviated from the center of the disc shape of the color wheel 701W, and is prepared as, for example, a laser or a lamp. The dichroic films 71R, 71G and 71B have respectively different reflection characteristics. For example, the dichroic films 71R, 71G and 71B are configured so as to allow transmitted light rays respectively transmitted therefrom to be three primary colors of red, green and blue. Thus, it is possible to generate light rays having the three primary colors required for the projector.

The color wheel 701W is subjected to thermal expansion and contraction caused by on/off of the light source 91. For this reason, supposing that the adhesion between each of the dichroic films 71R, 71G and 71B and the ceramic plate 70 is low, the dichroic films 71R, 71G and 71B might be peeled off. In accordance with the present embodiment, as described in first preferred embodiment, the peeling off of the dichroic films 71R, 71G and 71B can be prevented.

Moreover, in the case where a laser is used for the light source 91, the laser light is diffused by the grain boundary of the ceramic plate 70. Thus, it becomes possible to reduce speckle noise.

(Fifth preferred embodiment)

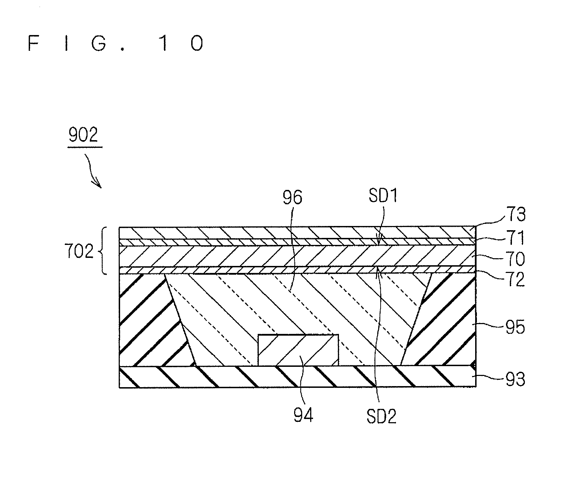

As shown in FIG. 10, a light emitting device 902 of the present embodiment is provided with the optical component 702 of second preferred embodiment, a mounting substrate 93, an LED 94, a case 95 and a filled portion 96. The mounting substrate 93 has a circuit pattern and external terminals (not shown). The LED 94 is mounted on the mounting substrate 93, and serves as, for example, a blue color LED. The case 95 surrounds the LED 94 on the mounting substrate 93. The filled portion 96, which corresponds to a portion filled inside the case 95, and is composed of, for example, a transparent resin or an inert gas.

The optical component 702 is installed on the case 95 so as to allow light from the LED 94 to be made incident thereon through the filled portion 96. The optical component 702 is disposed so that the main surface SD2 of the ceramic plate 70 is made face to face with the LED 94. The fluorescent layer 73 of the optical component 702 has such a function that by its fluorescence, the wavelength of light emitted from the LED 94 is converted and the resulting light is directed to the outside of the light emitting device 902 (upward in the drawing). In this case, however, a portion of the converted light proceeds reversely toward the LED 94 (downward in the drawing). By reflecting this light outside from the light emitting device 902 (upward in the drawing), the dichroic film 71 makes it possible to improve the efficiency of the light emitting device 902. For example, the LED 94 is a blue color diode, and the fluorescent layer 73 serves as a layer for converting the blue color into light having a longer wavelength, such as yellow color light. This configuration allows the light emitting device 902 to emit white color light.

In accordance with the present embodiment, of light emission from the fluorescent layer 73 (for example, yellow light), a light ray that proceeds reversely to the light emitting direction is reflected toward the emitting direction by the dichroic film 71. With this configuration, the light emission in the fluorescent layer 73 is effectively discharged toward the outside of the light emitting device 902.

(Sixth preferred embodiment)

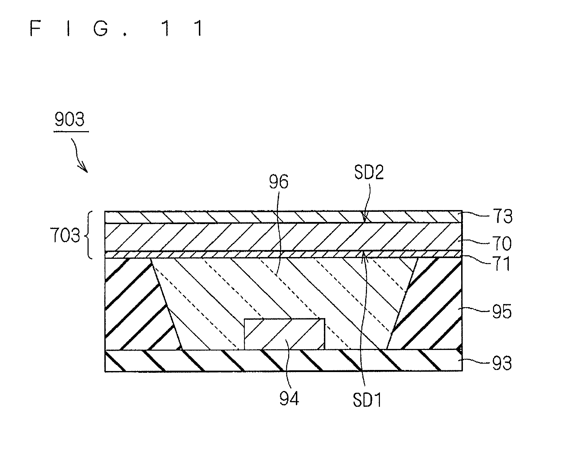

As shown in FIG. 11, a light emitting device 903 of the present embodiment is provided with the optical component 703 of third preferred embodiment, the mounting substrate 93, the LED 94, the case 95 and the filled portion 96. The optical component 703 is disposed such that the main surface SD1 of the ceramic plate 70 is made face to face with the LED 94.

Configurations other than those described above are virtually the same as those of the aforementioned embodiment 5; therefore, the same or corresponding elements are indicated by the same reference numerals, and the description thereof will not be repeated.

The optical component 703 is subjected to thermal expansion and contraction caused by on/off of the LED 94. For this reason, supposing that the adhesion between the dichroic film 71 and the ceramic plate 70 is low, the dichroic film 71 might be peeled off. In accordance with the present embodiment, as described in first preferred embodiment, the peeling off of the dichroic film 71 can be prevented.

Moreover, in accordance with the present embodiment, of light emission from the fluorescent layer 73 (for example, yellow light), a light ray that proceeds reversely to the light emitting direction is reflected toward the emitting direction by the dichroic film 71. With this configuration, the light emission in the fluorescent layer 73 is effectively discharged toward the outside of the light emitting device 902.

Moreover, for reasons explained in third preferred embodiment, deviations in optical characteristics of the dichroic film 71 can be suppressed. Consequently, deviations in luminescence characteristics of the light emitting device 903 can be suppressed.

(Modified Example)

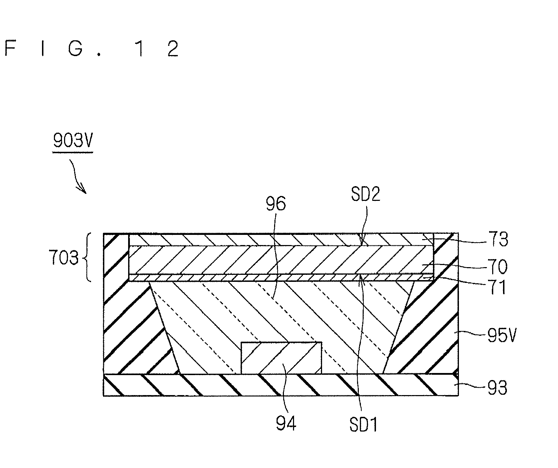

As shown in FIG. 12, a light emitting device 903V of the present modified example is provided with a case 95V in place of the case 95 (FIG. 11). The case 95V has a portion (upper right and upper left of the case 95V in FIG. 12) protruding in the thickness direction in a manner so as to surround the edge portion of the optical component 703. In other words, the case 95V is provided with a counter bore portion in which the optical component 703 is housed. In accordance with the present modified example, the optical component 703 is held by the case 95V in a more stable manner.

Moreover, in the present modified example, in the configuration shown in FIG. 11, a light component that has been emitted in a lateral direction by the thickness of the ceramic plate 70 can be returned into the ceramic plate 70 by the surrounding portion of the edge portion so that the resulting light can be effectively discharged in the front direction of the light emitting device 903V.

Additionally, in the configurations shown in FIG. 10 to FIG. 12, in some cases, light emitted by the LED 94 tends to be reflected by the optical component 702 or 703 and the inner wall of the case 95 or 95V many times repeatedly, and then made incident on the dichroic film 71. In this case, the angle made by the incident light onto the dichroic film 71 and the dichroic film 71 is set not to be constant, but to be at random.

In the present invention, the respective embodiments may be freely combined with one another, or if necessary, the respective embodiments can be be modified, omitted or the like within the scope of the invention. For example, the LED is not necessarily limited to a blue color, but a green color, a red color or the like can be utilized, and the conversion-light-emitting wavelength of the fluorescent material particles is not intended to be limited.

While the invention has been shown and described in detail, the foregoing description is in all aspects illustrative and not restrictive. It is therefore understood that numerous modifications and variations can be devised without departing from the scope of the invention.

An optical component 701 has a ceramic member 70 and a dichroic film 71. The ceramic member 70 is provided with a first main surface SD1 and a second main surface SD2 that is opposed to the first main surface. The ceramic member 70 has translucency. The ceramic member 70 has a plurality of crystal grains that are mutually bonded to one another through grain boundary portions. The dichroic film 71 is formed on the first main surface SD1 of the ceramic member.

**Claims**

1. An optical component (701, 701V, 701W, 702, 703) comprising:

   a ceramic member (70) that has a first main surface (SD1) and a second main surface (SD2) that is opposed to said first main surface formed thereon, with translucency, and also has a plurality of crystal grains (CG) that are combined with one another through grain boundary portions (GB); and

a dichroic film (71, 71B, 71G, 71R) formed on said first main surface of said ceramic member.

2. The optical component according to claim 1, wherein said first main surface has a grain boundary region (RB) that extends along said grain boundary portion and a plurality of crystal regions (RC) surrounded by said grain boundary region and positioned on said respective crystal grains, wherein said grain boundary regions have an area smaller than the area of said crystal regions.

3. The optical component according to claim 2, wherein said crystal region of said first main surface has a surface roughness of Ra 2000 nm or less.

4. The optical component according to claim 2, wherein said crystal region of said first main surface has a surface roughness of Ra 500 nm or less.

5. The optical component according to any one of claims 1 to 4, wherein said first main surface has a groove portion (TR) between mutually adjacent crystal grains of said crystal grains.

6. The optical component according to claim 5, wherein said groove portion has a depth of 10 nm to 2000 nm.

7. The optical component according to claim 5 or 6, wherein a side wall (SW) that protrudes from said groove portion is formed on one of said mutually adjacent crystal grains.

8. The optical component according to any one of claims 1 to 7, wherein said ceramic member contains aluminum oxide as a main component.

9. The optical component according to any one of claims 1 to 8, further comprising an antireflective film (72) on said second main surface of said ceramic member.

10. The optical component according to any one of claims 1 to 8, further comprising a fluorescent layer (73) on said second main surface of said ceramic member.

11. The optical component according to any one of claims 1 to 9, further comprising a fluorescent layer (73) on said dichroic film.

12. The optical component according to claim 10 or 11, wherein said fluorescent layer contains inorganic glass.

13. The optical component according to any one of claims 10 to 12, wherein said fluorescent layer has pores that occupy 5 to 40 volume% relative to the entire volume of said fluorescent layer.

14. The optical component according to any one of claims 10 to 13, wherein said fluorescent layer contains fluorescent material particles having an average particle size of 5 $\mu$m to 30 $\mu$m.

15. The optical component according to any one of claims 11 to 14, wherein said first main surface of said ceramic member is an as-fired surface.

F I G . 1

F I G . 2

F I G . 3 A

RC1　　　RB　TR　RC2

CG1　　　GB　CG2

F I G . 3 B

RB

RC3　SW　　RC4

CG3　　GB　CG4

F I G . 3 C

RC5　SW　RB　TR　RC6

CG5　　GB　CG6

F I G . 4

701V

701 { 71 / 70 / 72

SD1

SD2

FIG. 5

F I G . 6

| FORMING CERAMIC PLATE | ~S10 |

| FORMING DICHROIC FILM | ~S20 |

| FORMING REFLECTION PREVENTIVE FILM | ~S30 |

| FORMING FLUORESCENT LAYER | ~S40 |

| FIRING FLUORESCENT LAYER | ~S50 |

F I G . 7

703

701 {

71
70
73

SD1

SD2

F I G . 8

| FORMING CERAMIC PLATE | S10 |
| FORMING FLUORESCENT LAYER | S40 |
| FIRING FLUORESCENT LAYER | S50 |
| FORMING DICHROIC FILM | S20 |

F I G . 9 A

F I G . 9 B

F I G . 1 0

902

96    SD1

702 {    73
71
70
72

95

93

94    SD2

F I G . 1 1

F I G . 1 2

FIG. 13

**EUROPEAN SEARCH REPORT**

Application Number

EP 14 19 2975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2006 319149 A (SONY CORP) 24 November 2006 (2006-11-24) | 1,8,9 | INV. G02B27/10 G02B1/00 |
| A | * paragraph [0029]; figure 1 * | 2-7, 10-15 | |
| Y | US 6 730 421 B1 (KIRINO FUMIYOSHI [JP] ET AL) 4 May 2004 (2004-05-04) | 1,8,9 | |
| A | * the whole document * | 2-7, 10-15 | |
| A | JP 2010 182844 A (SEIKO EPSON CORP) 19 August 2010 (2010-08-19) * the whole document * | 1-15 | |

TECHNICAL FIELDS SEARCHED (IPC)

G02B

The present search report has been drawn up for all claims

| Place of search | Date of completion of the search | Examiner |
|---|---|---|
| The Hague | 27 February 2015 | Michel, Alain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 19 2975

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2015

| Patent document cited in search report | | Publication date | Patent family member(s) | | Publication date |
|---|---|---|---|---|---|
| JP 2006319149 | A | 24-11-2006 | NONE | | |
| US 6730421 | B1 | 04-05-2004 | AU | 4431100 A | 21-11-2000 |
| | | | US | 6730421 B1 | 04-05-2004 |
| | | | US | 2004166376 A1 | 26-08-2004 |
| | | | WO | 0068941 A1 | 16-11-2000 |
| JP 2010182844 | A | 19-08-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011197212 A